# FASCICULE DE BREVET EUROPEEN

(11) **EP 1 019 330 B1**
(45) Date de publication et mention de la délivrance du brevet: **04.12.2002**
(21) Numéro de dépôt: 98946505.9
(22) Date de dépôt: 23.09.1998
(51) Int. Cl.: C02F 3/12, C02F 3/02

(54) **PROCEDE DE CONTROLE DES SYSTEMES D'AERATION DE BASSINS BIOLOGIQUES DE TRAITEMENT DES EAUX USEES**
VERFAHREN ZUR KONTROLLE VON BELÜFTUNGSSYSTEME IN EINER BIOLOGISCHEN ABWASSERBEHANDLUNGSANLAGE
METHOD FOR CONTROLLING AERATION SYSTEMS OF BIOLOGICAL TANKS TREATING WASTE WATER

(30) Priorité: 02.10.1997 FR 9712280
(43) Date de publication de la demande: 19.07.2000
(73) Titulaire: Suez Lyonnaise des Eaux, 92753 Nanterre Cedex (FR)
(72) Inventeur: CHATELLIER, Patrice, F-75018 Paris (FR); CAULET, Philippe, F-78870 Bailly (FR)
(74) Mandataire: Armengaud Ainé, Alain
(86) Numéro de dépôt international: FR9802046
(87) Numéro de publication internationale: WO99018036

(56) Documents cités:
- EP-A- 0 260 187
- GB-A- 2 184 110

## Description

La présente invention concerne un nouveau procédé de contrôle des systèmes d'aération des bassins biologiques d'une installation de traitement d'eaux usées, ce procédé ayant plus particulièrement pour objectif de contrôler l'efficacité du système d'aération. L'invention s'applique au cas où l'aération du bassin s'opère par des séquences de marche/arrêt du système d'aération et elle permet notamment de prendre en compte le cas où des flux constants de biomasse et de pollution entrent et sortent du bassin au cours du contrôle, autorisant ainsi une régulation des systèmes biologiques, aérobies, fondée sur différentes mesures physiques présentant l'avantage d'être rapidement accessibles, le procédé selon l'invention permettant ainsi une régulation en ligne.

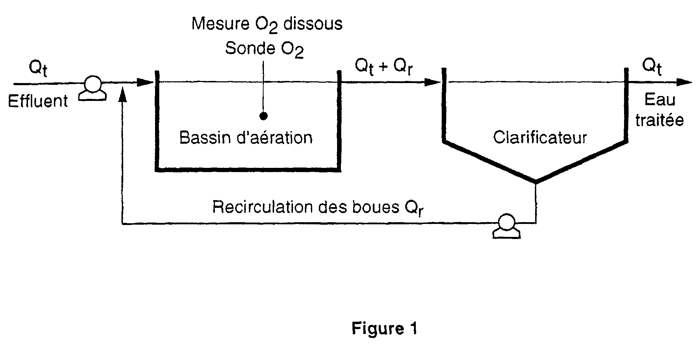

Selon l'invention et ainsi qu'on l'exposera ci-après, ces mesures portent sur (Figure 1):
- la concentration en oxygène dissous dans le bassin d'aération et,
- le débit traversier Qt de l'installation ;
- le débit Qr de recirculation de la liqueur mixte du clarificateur vers le bassin d'aération.

Conséquence des directives européennes, les techniques d'épuration actuellement mises en oeuvre, visent à limiter les rejets dans le milieu naturel d'eaux usées non traitées, les stations devant assurer le traitement de toutes les eaux collectées , à l'exception des événements pluvieux exceptionnels . Ces stations de traitement ont pour caractéristique commune de mettre en oeuvre une épuration par boues activées comportant un bassin de traitement dans lequel s'opère un transfert d'oxygène vers le mélange « eau + biomasse » . Ce transfert est nécessaire au développement de la biomasse épurante .

En outre , une fiabilité accrue est exigée par les directives européennes en question et impose donc un suivi rigoureux des stations d'épuration et leur maintien dans le meilleur état de fonctionnement possible, avec un maximum de capacité épuratoire disponible ( c'est-à-dire avec une biomasse « au mieux de sa forme » et des équipements en parfait état de maintenance et de fonctionnement ) .

Une des causes majeures du dysfonctionnement des stations d'épuration est la carence ou l'insuffisance d'apport en oxygène ; ce déficit d'oxygénation se traduit à terme par l'apparition de phénomènes d'anaérobiose , entraînant le développement de bactéries filamenteuses dans la biomasse, puis l'apparition de mousses, le phénomène de dégradation des performances étant d'autant plus rapide qu'il est auto-accéléré .

L'efficacité du système d'aération est habituellement mesurée, avant la mise en service de la station d'épuration, à l'aide de techniques de mesure *in vitro,* ne prenant absolument pas en compte l'influence de la biomasse sur le transfert d'oxygène . En effet, la mesure du coefficient de transfert (que nous appellerons coefficient standard de transfert, dans ce cas) est habituellement effectuée en eau claire, et en présence de bisulfite de sodium, réactif réducteur de l'oxygène : on peut ainsi contrôler un transfert gaz-liquide, mais en dehors de tout phénomène biologique . Par contre, lorsque la biomasse est « installée » dans le bassin d'aération, ladite biomasse fonctionne comme une pompe biologique à oxygène et on peut alors avoir accès à un coefficient de transfert corrigé, α kLa, où α représente un coefficient de correction de valeur comprise entre 0,5 et 0,9, et prenant en compte le fonctionnement biologique, les différences de viscosité entre la liqueur mixte et l'eau claire et les différences d'hydrodynamique résultant du fonctionnement en présence de biomasse . Une fois la station mise en route, on doit faire appel à des techniques de mesure délicates pour déterminer la quantité d'oxygène transférée vers le mélange eau + biomasse, tout en n'obtenant que des valeurs instantanées, ne donnant, par exemple, aucune information sur une éventuelle dérive de l'efficacité du système d'aération.

Les systèmes selon la technique antérieure, habituellement mis en oeuvre pour le suivi et/ou l'asservissement du fonctionnement des stations d'épuration d'eaux usées sont de divers types :
- mise en oeuvre d'une temporisation agissant sur la fréquence et la durée des périodes d'aération,
- détection des seuils de potentiel d'oxydoréduction, ou de concentration en oxygène dans le bassin d'aération : ainsi, GB-A-2 184 110 décrit un dispositif pour le traitement d'effluents selon lequel on utilise des moyens pour contrôler la concentration en oxygène dissous dans le réacteur biologique ainsi que des moyens pour mesurer la vitesse de diminution de la concentration en oxygène dissous, en l'absence d'aération, et les informations obtenues sont utilisées pour émettre un signal d'alarme lorsque cette diminution est inférieure à une consigne prédéterminée ; de même EP-A-0 260 187 concerne un procédé de traitement biologique en vue de l'optimisation de la gestion de l'aération consistant à mesurer en continu la concentration en oxygène dissous durant l'étape d'aération, les valeurs de concentration ainsi obtenues permettant de calculer la demande en oxygène et de régler l'aération,
- systèmes de contrôle basés sur la dérivée de la variation du potentiel d'oxydoréduction en fonction du temps (FR-A-2 724 646).

Aucun de ces systèmes ne résoud le problème technique résolu par la présente invention, c'est-à-dire l'établissement, durant les périodes d'aération et de non aération des bilans matières de l'oxygène apporté, consommé et évacué avec l'effluent durant la phase d'aération et, respectivement de l'oxygène consommé et évacué avec l'effluent durant la phase de non aération, en vue d'assurer un diagnostic d'évolution des performances d'une station et donc d'anticiper sur d'éventuels incidents, le stade ultime de leur performance dans ce domaine étant de déclencher une alarme lorsque la limite de capacité de l'installation est atteinte. L'expérience acquise montre l'intérêt de mettre en oeuvre une gestion préventive, ce qui constitue l'un des objectifs de la présente invention.

Un autre objectif de l'invention est de réaliser une mesure *in-situ* de la quantité d'oxygène transféré à un réacteur biologique, ce qui permet de prendre en compte l'influence de la biomasse et de l'hydraulique sur la quantité d'oxygène transférée.

Une gestion préventive du fonctionnement d'une station d'épuration biologique suppose un contrôle régulier de l'efficacité du système d'aération. Un tel contrôle permet de mettre en évidence une baisse progressive de l'efficacité du dispositif, phénomène qui impose une planification d'une intervention de maintenance et, de façon transitoire, la mise en oeuvre de mesures palliatives telles que, par exemple, l'augmentation du nombre des turbines d'aération ou de leur vitesse de rotation. Le procédé de contrôle objet de l'invention a donc été mis au point dans le but d'assurer un suivi suffisamment fréquent de l'efficacité du système d'aération.

Selon l'invention, on utilise l'alternance des séquences de marche/arrêt du système d'aération des bassins biologiques, résultant de la conduite conventionnelle du procédé d'épuration biologique pour estimer l'efficacité du système d'aération. On notera que l'application de la procédure de contrôle ne nécessite aucune adaptation ou modification de la conduite du procédé.

Le procédé objet de l'invention est caractérisé en ce qu'il consiste à :
1) Mesurer le débit traversier Qt de l'installation et le débit Qr de recirculation de la liqueur mixte du clarificateur vers le bassin d'aération et,
2) Mesurer la concentration en oxygène dissous dans le bassin d'aération, à l'aide d'une sonde à oxygène afin :
   a) d'établir, au cours d'une période d'aération, le bilan matière de l'oxygène apporté, consommé et évacué avec l'effluent ;
   b) d'établir, au cours d'une période de non-aération, le bilan matière de l'oxygène consommé et évacué avec l'effluent ;
   c) de déterminer la valeur d'oxygène consommé par la biomasse à partir des deux bilans matières précédemment obtenus et,
   d) de déterminer, à partir des données obtenues en a), b) et c) la valeur du coefficient de transfert α.k_{L}a dans les conditions de la mesure.

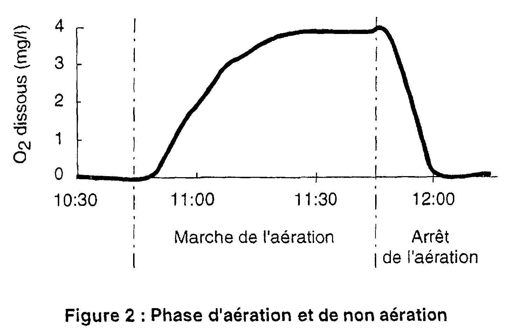

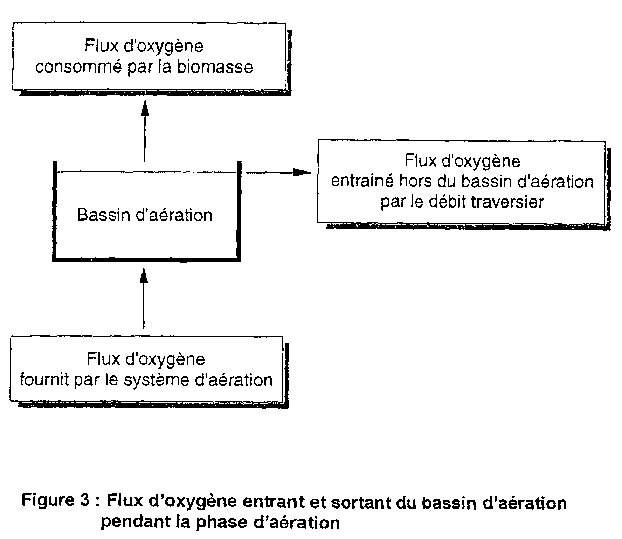

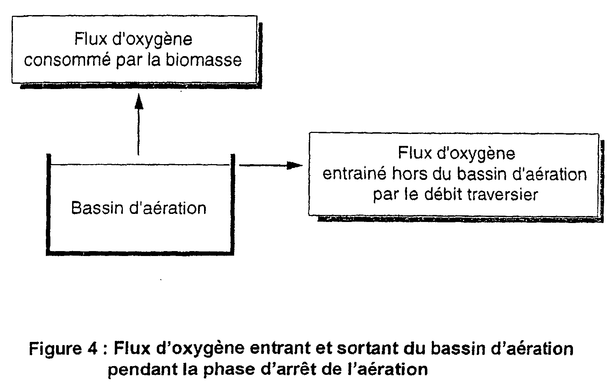

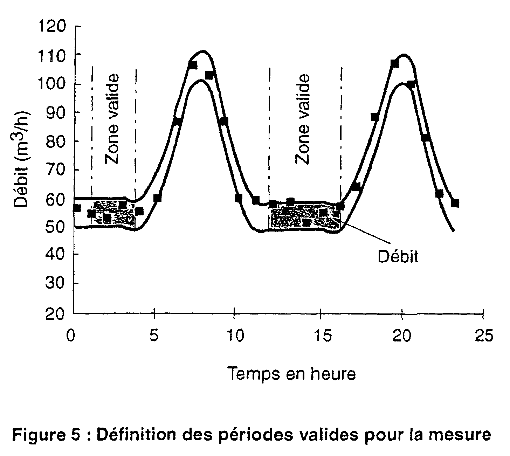

Ainsi qu'on le comprend, le procédé de contrôle objet de l'invention se déroule en deux temps, au cours des cycles marche-arrêt de l'aération (Figure 2)
1° Lors de la phase d'injection d'air (ou d'oxygène) par le système d'aération dans le bassin d'aération, l'étude des informations fournies par les sondes à oxygène mises en place permet de calculer d'une part l'évolution de la quantité d'oxygène contenue dans le bassin d'aération et d'autre part, la quantité d'oxygène sortant dudit bassin d'aération, la quantité d'oxygène entrant dans le bassin, apportée par l'eau résiduaire non traitée et par le débit de recirculation étant considérée comme négligeable. Le principe de conservation de la matière indique que la quantité d'oxygène apportée par le système d'aération compense exactement la somme de la quantité d'oxygène servant à la respiration de la biomasse + la quantité d'oxygène sortant du bassin d'aération (Figure 3).
2° Lors de la phase d'arrêt d'injection d'air (ou d'oxygène) dans le bassin d'aération, une analyse identique à la précédente permet de calculer le même bilan massique, la quantité d'oxygène apportée par le système d'aération étant alors nulle (Figure 4). Avec un tel système de deux équations à deux inconnues, il est aisé d'obtenir la valeur du flux d'oxygène transféré à la biomasse et, par conséquent la valeur du coefficient de transfert.

L'évolution en fonction du temps, des valeurs successives du coefficient de transfert α.k_{L}a, permet de déterminer les variations d'efficacité du ou des systèmes d'aération.

Ainsi, l'un des avantages du procédé de l'objet de l'invention est qu'il n'utilise pas d'appareils de respiromètrie couplés au bassin d'aération pour effectuer une mesure qui resterait ponctuelle et in vitro. Par ailleurs, il n'est pas nécessaire de modifier en quoi que ce soit les conditions de fonctionnement de l'installation pour obtenir les résultats selon l'invention, ce qui distingue clairement l'invention de la totalité des systèmes antérieurement décrits (« les performances des systèmes d'aération d'épuration », méthodes de mesure et résultats, Ministère de l'Agriculture, CTGREF mars 1980).

Ainsi qu'on l'a précisé ci-dessus une autre caractéristique avantageuse du procédé de l'invention est de permettre une réalisation in-situ de la mesure de la valeur d'oxygène consommée par la biomasse, ce qui permet de prendre en compte l'influence de la biomasse et de l'hydraulique sur la quantité d'oxygène transférée au bassin d'aération.

Des flux constants de mélange liquide + biomasse peuvent entrer et sortir du bassin d'aération au cours du contrôle. Il est important que ces flux restent constants de façon que le flux d'oxygène « respiré » par la biomasse reste constant tout au long du cycle de mesure.

On comprend de la lecture de la description qui précède que l'invention permet de déterminer en temps réel in-situ l'efficacité du système d'aération, sans modifier la conduite de l'installation.

Elle se différencie de l'état antérieur de la technique notamment par :
- la faculté de contrôler l'état de fonctionnement et/ou d'encrassement du système d'aération,
- la mise à profit des périodes d'aération/non-aération pour réaliser l'acquisition des données.

Il demeure bien entendu que la présente invention n'est pas limitée aux exemples de réalisation décrits et/ou représentés mais qu'elle en englobe toutes les variantes qui entrent dans le cadre de la portée des revendications annexées.

## Revendications

1. Procédé de contrôle de l'efficacité des systèmes d'aération des bassins biologiques d'une installation de traitement d'eaux **caractérisé en ce qu'**il consiste à :
i) mesurer le débit traversier (Qt) de l'installation et le débit (Qr) de recirculation de la liqueur mixte du clarificateur vers le bassin d'aération et,
ii) mesurer la concentration en oxygène dissous dans le bassin d'aération afin :
a) d'établir, au cours d'une période d'aération, le bilan matière de l'oxygène apporté, consommé et évacué avec l'effluent,
b) d'établir, au cours d'une période de non-aération, le bilan matière de l'oxygène consommé et évacué avec l'effluent,
c) de déterminer la valeur d'oxygène consommée par la biomasse à partir des deux bilans matières précédemment établis et,
d) de déterminer, à partir des données obtenues en a), b) et c), la valeur du coefficient de transfert α.k_{L}a dans les conditions de la mesure.

2. Procédé selon la revendication 1 **caractérisé en ce que** les flux de mélange liquide + biomasse entrant et sortant du bassin d'aération restent constants pendant la mesure afin que le flux d'oxygène « respiré » par la biomasse demeure constant tout au long du cycle de mesure.

3. Procédé selon l'une des revendications 1 ou 2 **caractérisé en ce qu'**il comporte l'étape supplémentaire consistant à entreprendre des mesures correctives à partir de la détermination de l'efficacité du système d'aération.

## Patentansprüche

1. Venfahren zur Kontrolle des Wirkungsgrades von Systemen zur Belüftung biologischer Behandlungsbecken einer Wasserbehandlungsanlage, **dadurch gekennzeichnet, dass** es darin besteht,
I) den Anlagendurchsatz (Qt) und den Durchsatz (Qr) des Rücklaufs der Mischflüssigkeit vom Klärbecken zum Belüftungsbecken und
II) die Konzentration an gelöstern Sauerstoff im Belüftungsbecken zu messen, um
a) während einer Belüftungsdauer die Stoffbilanz des Sauerstoffs aufzustellen, der eingetragen, verbraucht und mit dem Abwasser ausgetragen wird,
b) während der Dauer einer Nicht-Belüftung die Stoffbilanz des Sauerstoffs aufzustellen, der verbraucht und mit dem Abwasser ausgetragen wird,
c) die Höhe des von der Biomasse verbrauchten Sauerstoffs aus den beiden zuvor aufgestellten Stoffbilanzen zu bestimmen und
d) aus den in a), b) und c) erhaltenen Daten den Wert des Sauerstoff-Übergangskoeffizienten α·k_{L}a unter den Messbedingungen zu bestimmen.

2. Verfahren nach Anspruch 1, **dadurch gekennzeichnet, dass** die Strörne aus flüssigern Gemisch + Biomasse, die in das Belüftungsbecken gelangen und es wieder verlassen, während der Messung konstant bleiben, damit der Strom des von der Biomasse veratmeten Sauerstoffs während des gesamten Messzyklus konstant bleibt.

3. Verfahren nach Anspruch 1 oder 2, **dadurch gekennzeichnet, dass** es eine zusätzliche Stufe umfasst, die darin besteht, aus der Bestimmung des Wirkungsgrades des Belüftungssystems korrigierende Maßnahmen durchzuführen.

## Claims

1. Process for controlling the efficiency of aeration systems of biological tanks of a waste water treatment installation, **characterized in that** it comprises:
(i) measuring the throughflow (Qt) of the installation and the recirculation flow (Qr) of the settling tank mixed liquid to the aeration tank and
(ii) measuring the oxygen concentration dissolved in the aeration tank in order to:
a) establish, during an aeration period, the material balance of the oxygen supplied, consumed and discharged with the effluent,
b) establish, during a non-aeration period, the material balance of oxygen consumed and discharged with the effluent,
c) determine the oxygen value consumed by the biomass on the basis of two previously established material balances and
d) determine, on the basis of the data obtained in a), b) and c), the value of the transfer coefficient α.k_{L}a under the conditions of the measurement.

2. Process according to claim 1, **characterized in that** the liquid + biomass mixture flow entering and leaving the aeration tank remain constant throughout the measurement, so that the oxygen flow "breathed" by the biomass remains constant throughout the measurement cycle.

3. Process according to one of the claims 1 or 2, **characterized in that** it incorporates the supplementary stage of performing corrective measurements on the basis of the determination of the efficiency of the aeration system.
